# EUROPEAN PATENT SPECIFICATION

(11) **EP 4 139 526 B1**
(45) Date of publication and mention of the grant of the patent: **05.06.2024**
(21) Application number: 21706724.8
(22) Date of filing: 16.02.2021
(51) Int. Cl.: D21H 19/40, B41M 1/20, B41M 5/00, B41M 5/41, B41M 5/52, D21H 19/82, D21H 21/52, B44C 5/04

(54) **DECORATIVE PAPER LAYER AND METHOD FOR MANUFACTURING LAMINATES**
DEKORATIVE PAPIERSCHICHT UND VERFAHREN ZUR HERSTELLUNG VON LAMINATEN
COUCHE DE PAPIER DÉCORATIF ET PROCÉDÉ DE FABRICATION DE STRATIFIÉS

(30) Priority: 20.04.2020 EP 20170318
(43) Date of publication of application: 01.03.2023
(73) Proprietor: Unilin, BV, 8710 Wielsbeke (BE)
(72) Inventor: CLEMENT, Benjamin, 8790 Waregem (BE)
(74) Representative: Unilin Technologies
(86) International application number: PCT/IB2021/051280
(87) International publication number: WO 2021/214559

(56) References cited:
- WO-A1-2015/104249
- WO-A1-2015/104652

## Description

The present invention relates to a decorative paper layer for use in a method for manufacturing laminated assemblies, such as laminated panels having a decorative surface, or, so-called decorative panels, as well as to a method for manufacturing such laminates or laminated panels. Clearly, the decorative paper layer of the invention may be used in a laminated assembly other than a panel, such as in so-called CPL (compact laminate), which may consists of a laminate of two or more consolidated resin impregnated paper layers.

More particularly, the invention is related to a method for manufacturing laminate panels, wherein said panels at least comprise a substrate material and a provided thereon top layer with a printed decor. The method could be used for manufacturing panels, the top layer of which is formed from thermosetting resin and one or more paper layers, wherein said paper layers comprise a decor paper having a printed pattern.

Traditionally, the decor or pattern of such panels is printed on paper by means of offset or rotogravure printing. The obtained paper is taken up as a decorative paper in a so called laminate panel. For manufacturing such panels the DPL process can be practiced. According to the DPL process (Direct Pressure Laminate) the already printed paper or decorative paper is provided with a melamine based resin to form a decorative layer. Afterwards a stack is formed comprising at least a plate shaped substrate, said decorative layer and possibly a protective layer on top of said decorative layer, wherein said protective layer or overlay is based on resin and/or paper as well. Said stack is pressed and the press treatment results in a mutual connection or adherence of the decorative paper, the substrate and the protective layer, as well as in a hardening of the resin present in the stack. As a result of the pressing operation a decorative panel is obtained having a melamine surface, which can be highly wear resistant. At the bottom side of the plate shaped substrate a counter layer or balancing layer can be applied, or as an alternative a decorative layer might be attached to the bottom side as well, especially in the case of laminate panels for furniture. Such a counter layer or balancing layer or any other layer at the bottom side of the laminate panel restricts or prevents possible bending of the decorative panel, and is applied in the same press treatment, for example by the provision of a resin carrying paper layer as the lowermost layer of the stack, at the side of the stack opposite said decorative layer. For examples of a DPL process reference is made to EP 1 290 290, from which it is further known to provide a relief in said melamine surface during the same press treatment or pressing operation, namely by bringing said melamine surface in contact with a structured press element, for example a structured press plate.

The printing of paper by means of an analog printing process, such as by rotogravure or offset printing, at affordable prices inevitably leads to large minimal order quantities of a particular decorative paper and restricts the attainable flexibility. A change of decor or pattern necessitates a standstill of the printing equipment of about 24 hours. This standstill time is needed for exchange of the printing rollers, the cleaning of the printing equipment and for adjusting the colors of the new decor or pattern to be printed.

Instead of analog printing techniques, digital printing techniques, especially inkjet printing techniques, are becoming increasingly popular for the creation of decors or patterns, be it on paper or directly on a plate-shaped substrate possibly with the intermediary of preparatory layers. Such digital techniques can enhance the flexibility in the printing of decors significantly. Reference is amongst others made to the EP 1 872 959, WO 2011/124503, EP 1 857 511, EP 2 431 190, EP 2 293 946, WO 2014/084787, WO 2015/140682 and the WO 2015/118451, where such techniques are disclosed.

EP 2 132 041 discloses a method at least comprising the step of providing a paper layer with thermosetting resin and the step of providing said resin provided paper layer with a printed pattern. Preferably multi color printed patterns are applied for the realization of a decor, e.g. representing a wood pattern, on the abovementioned paper layer. Such decor extends over the majority, or even over the totality of the resin provided paper layer. In EP 2 132 041, a digital printer, more particularly an inkjet printer is applied. It has however been very difficult to reliably further process such printed paper for manufacturing laminate panels, such as in a DPL process, since pressing defects may originate in the resin surface and milling, drilling or sawing through the laminate surface or at the edge thereof often leads to splitting in the top layer. Furthermore, the inks or dyes of the EP'041 may overly wet the paper layer and cause wrinkling effects or bleeding upon further handling of the printed paper, leading to an instable and/or slow production process. To solve this issue the EP'041 proposes to immediately dry the printed paper layer.

EP 1 044 822, EP 1 749 676 and EP 2 274 485 disclose the use of an inkjet receiver coating to enhance the printing quality on an otherwise untreated base paper layer. Such inkjet receiver coating comprises pigments and a polymer such as polyvinyl alcohol. Although enhanced, the obtained color density of the print on such treated paper is still inferior to that of analog prints, and pressing defects may originate especially when such printed paper is to be overlaid with a resin impregnated protective paper sheet, such as an overlay. The lamination strength between the decorative paper layer and the protective paper sheet may sometimes be lower than acceptable. WO2015104652A1 similarly discloses the use of an inkjet receiver coating including a polymeric binder and pigments on an untreated base paper layer and further discloses a printing method wherein the total volume of pigment printed on the paper is below 9 grams per square meter to prevent wrinkling of the paper.

WO2015104249A1 discloses a method for printing onto decorative paper wherein the base paper layer comprises an inkjet receiver coating comprising a polymeric binder and pigments and wherein the color ink used for printing comprise water-based pigmented ink including a red pigment.

The present invention aims in the first place at an alternative decorative paper layer that may be used in a method for manufacturing panels having a decorative surface, and seeks, in accordance with several of its preferred embodiments, to solve one or more of the problems arising in the state of the art.

Therefore the present invention, in accordance with its first independent aspect, relates to a decorative paper layer comprising a base paper layer, an inkjet receiver coating and a pattern formed thereon by digitally applying inks from a set of a plurality of differently colored inks, with as a characteristic that at least one of said inks comprises color pigments having an average particle diameter larger than 150 nm, or larger than 175 nm, and in that said inkjet receiver coating comprises silica pigments, wherein said silica pigments are particles of silica gel and have an average particle size which is at least 5 times larger than said average particle diameter of said color pigments and/or have an average particle size of 1 to 40 micrometer, preferably 1 to 15 micrometer, or 2 to 12 micrometer, with said average particle sizes and said average particle diameters being determined by the laser light scattering granulometry technique. The inventor has noted that this combination of particle sizes of ink pigments and silica pigments leads to surprisingly good results from the point of view of lack of pressing defects and enhanced lamination strength when hot pressed with e.g. a protective resin impregnated paper sheet. The inventor contributes this surprising result by assuming that it are the larger silica particles that dictate the quality of the interface between the two paper and/or resin layers, rather than the smaller ink pigments and the polymeric content of the ink that are known to sometimes be interfering with the resin bound.

Preferably the ratio average particle size of the silica / average particle size of the ink pigment is larger than 10, or even larger than 15.

The average particle size of the pigments of the ink are preferably smaller than 300 nm. The laser light scattering granulometry is performed in accordance with ISO 13320, namely by a dynamic light scattering technique using a laser having an emission wavelength of 632.8 nm and measured under a scattering angle of 90 degrees. Such granulometry may e.g. be performed with a Malvern^{®} Mastersizer 2000 or with a Malvern^{®} Mastersizer 3000. For executing the measurement of the particle size distribution, the respective particles may be dispersed in a liquid, such as water. Preferably the thickness of said base paper layer is between 50 and 200 µm, preferably between 60 and 130 µm.

The color pigments comprise red pigments selected from the group consisting of C.I. Pigment Red 122, C.I. Pigment Red 144, C.I. Pigment Red 176, C.I. Pigment Red 188, C.I. Pigment Red 207, C.I. Pigment Red 242, C.I. Pigment Red 254, C.I. Pigment Red 272, mixed crystals of any of the aforementioned red pigments, quinacridone, mixtures of quinacridones, and quinacridone derivatives. Inks having red pigment could otherwise create delamination problems, but the inventor has noted that especially with these pigments, at the claimed pigment size, and with the claimed silica particles, very good results have been obtained from the point of view of lamination strength. That delamination is a particular problem with red pigments may be attributed to the fact that red pigmented ink often has a higher polymeric content, wherein such polymer interferes with the resin bond to be formed between layers of the laminate.

Preferably, the silica particles are available on said surface of said base paper layer.

Preferably, said silica particles are particles of silica gel, having an average particle size of 1 to 40 micrometer, preferably 1 to 15 micrometer, or 2 to 12 micrometer.

According to the most preferred embodiment, a particle size distribution of the silica gel particles in the inkjet receiver coating is used which has a d10 of 3 or about 3 micrometer, a d90 of 10 or about 10 micrometer and a d50 of 4.5 to 5.7 micrometer, preferably about 5.3 micrometer.

The core of said base paper layer is free from silica particles.

Preferably, said inks penetrate from said surface into the core of said base paper layer over a depth equaling less than 30% of the thickness of the base paper layer, and preferably at least 10% of the thickness of the base paper layer. Preferably the thickness of said base paper layer is between 50 and 200 µm, preferably between 60 and 130 µm. The pattern formed by the digitally applied inks preferably extends over the majority, or even over the totality of the base paper layer. Preferably, on average, an ink load of at least 1 gram per square meter, or at least 2 grams per square meter is present in the printed area of said base paper layer.

It is clear that the longitudinal edges of the base paper layer may be left unprinted, or be printed with a technical image, such as position marks and/or markings to visually check printing quality.

Preferably said decorative layer is in roll form, and has, therefor, a practically endless length, for example at least 1000 meter, and/or the width of said decorative layer is preferably between 1 meter and 4 meter, more preferably between 1.6 and 2.2 meter. Preferably said inkjet receiver coating further comprises a binder such as polyvinyl alcohol (PVA), preferably crosslinked.

Preferably, said inks are aqueous pigmented inks. Especially in the cases where the inks have been applied by inkjet printing, the water content of the applied inks may be large, as firing microdroplets, such as droplets having a volume of 65 picoliter (pL) or below, requires a low viscosity of the ink. According to a preferred embodiment, the droplets used may be between 1 and 10 pL, for example 3 or 6 picoliter droplets. The relative large watery content is to be absorbed amongst others in the silica particles and the potential binder of the inkjet receiver coating.

Preferably, said base paper layer has a mean air resistance according to the Gurley method (Tappi T460) of 25 seconds or below. The low air resistance makes the base paper layer particularly suitable for impregnation with resin. Preferably a thermosetting resin is used, as may be the case in the aforementioned DPL process. A preferred thermosetting resin is melamine based resin, such as a melamine formaldehyde resin.

Preferably, said base paper layer has a paper surface weight of 60 to 85 grams per square meter, wherein 70 grams or about 70 grams per square meter is a preferred value.

The inventor has found that some penetration of the inks into the depth direction of the base paper layer is best to be tolerated, but not too much. The tolerable penetration is aimed at attaining a certain bleeding of the inks in the horizontal direction, i.e. in the directions comprised in the surface of the paper. The horizontal bleeding may lead to an eventual recorded dot which is significantly larger than the expected size of the recorded dot based on the volume of the applied droplet of ink, more particularly larger than the expected size based on the dimension of the fired droplet of ink in the case of an inkjet printer. Significant horizontal bleeding, or dot gain, leads to a high color density of the obtained print, and vivid colors can be obtained with less ink applied to the base paper layer. Preferably said inks are applied by firing droplets to said base paper layer at a definition as expressed by a DPI value (Dots Per Inch) and yielding an average distance in between the center of adjacent dots formed by respective ink droplet, whereas the dots formed by said ink droplets are larger than said average distance.

Preferably said depth over which the inks penetrate is less than 30 µm, preferably 20 µm or less.

A limited ink penetration combined with a significant horizontal bleeding, or dot gain, can be reached in accordance with one or a combination of two or more of the below possibilities.

According to a first possibility, silica particles are available on said surface of said base paper layer. Preferably the silica content of said base paper layer is essentially available on said surface. Preferably the silica content of said base paper layer quickly drops underneath said surface. Preferably, the silica content of said base paper layer at a depth of 20%, or even at a depth of 10%, of the thickness of the base paper layer is below 5% of the silica content on said surface, or even below 1%, if not 0%. The silica particles may be present in an ink receiving layer provided at said surface. Preferably, such ink receiving layer further comprises a binder, preferably a hydrophilic binder, such as PVA (polyvinyl alcohol), and/or comprises a metal salt, such as Calcium Chloride or CaCl₂. The availability of silica particles immediately on the surface of the base paper layer, possibly in combination with a hydrophilic binder, leads to a quick absorption of the vehicle of the inks, and a limited bleeding in depth direction of color pigments dispersed in said vehicle. The preferable availability of a metal salt at the surface of the base paper layer destabilizes the dispersed pigments and tends to lock the pigments at the surface or the immediate vicinity thereof, while the vehicle is allowed to penetrate further down.

According to a second possibility, silica particles are available in and/or on said base paper layer, said silica particles being particles of precipitated silica, preferably having an average particle size of 1 to 40 micrometer, preferably 1 to 15 micrometer, or 2 to 12 micrometer. As opposed to smaller particles, particles in the range of 1 to 40 micrometer are less prone to be absorbed in the base paper layer upon application, thereby being more effective at the surface of the paper layer. The silica particles of the precipitated type are generally larger than e.g. particles of the fumed type, and have a higher surface roughness. Precipitated silica is porous and, in the cases where the printed paper layer is afterwards impregnated with a resin, like melamine resin, the resin may also penetrate the porosities of the precipitated silica. Further precipitated silica comprises more silanol-groups and hydroxy groups than fumed silica. These groups have more affinity, compatibility, with a resin like melamine resin. The inventor has further observed that a coating obtained with precipitated silica has a higher roughness or, in other words a BEKK smoothness value (measured in accordance with ISO 5627:1995) that is significantly lower, than when the same coating is formed with fumed silica. All of the above leads to a better adhesion of any resin or resin layer applied on top of the printed pattern, especially when high ink loads are used to form the pattern or certain areas thereof, such as ink loads of 4 milliliter per square meter or more.

The core of said base paper layer is free from silica particles. It is preferred that any coating with silica is preferably mainly present at the surface of the base paper layer, namely there where it is most effective in limiting the penetration depth and generating some horizontal bleeding or dot gain. The inventor has observed that certain commercial inkjet printable base paper layers for use in DPL panels have a large content of relatively small, i.e. 200 nanometer or smaller, fumed silica particles that has penetrated in between the cellulose fibers of the base paper layer. These papers lead to penetration of pigmented aqueous inks in depth direction to a much larger extent, and to a subsequent loss of color density. A higher ink loading must be practiced to attain a certain color density, which leads in itself then to problems of adhesions with any resin to be applied in or on top of the printed paper layer. The inventor has observed that horizontal bleeding may be practically non-existent in these commercial papers, especially when being jetted upon with small droplets, like 3 pL droplets.

Preferably, all three of the above possibilities are combined on the surface of the same base paper. Preferably a base paper layer is obtained comprising at one of its major surfaces particles of precipitated silica with an average particle size value between 1 and 40 micrometer, whereas the core of said paper layer is free or essentially free from silica particles.

From the above it is clear that it is preferred that the inkjet receiver coating on the surface of the printable paper layer is concentrated on the surface rather than being available within the cellulose content of the paper layer, i.e. inside of the paper layer. As stated before, silica pigments of the precipitated type are generally larger than e.g. silica pigments of the fumed type. Pigments of larger particle size tend to become less impregnated into the cellulose core of the base paper layer.

Preferably, said silica pigments have a specific surface area, as defined by the BET area measured in accordance with ISO 9277:2010, between 100 and 750 m²/gram, preferably between 300 and 750 m²/gram. The higher BET area leads to a better incorporation of the pigments into the other components of the inkjet receiver coating, such as into a binder. The better incorporated pigments tend to be kept at the surface of the paper rather than penetrating the cellulose core, and also keep other components of the coating substance at the surface.

It is noted that said inks are preferably water-based inks, although UV curing inks or latex based inks or hydro-UV inks are not excluded.

It is further noted that said silica particles may be silane treated. Silane treatment of the pigments, in general, may further enhance, i.e. lower, dust release of the attained inkjet receiver coating and the thus treated paper. The silane treatment may relate to a treatment with a coupling agent such as amino-organo-silanes, hydroxysilanes, dipodal silanes and/or other silanes. Preferably, the coupling agent is chosen such that the risk of yellowing upon aging of the attained inkjet receiver coating is low. Preferably, the coupling agent forms 0.1 to 10% of the total wet weight of the inkjet receiver coating.

As afore stated, preferably, the inkjet receiver coating on the surface of the base paper layer comprises, next to silica particles, preferably also a binder. Preferred binders for the inkjet receiving layer include polyvinyl alcohol (PVA), but according to variants a vinylalcohol copolymer or modified polyvinyl alcohol may be applied. The modified polyvinyl alcohol may be a cationic type polyvinyl alcohol, such as the cationic polyvinyl alcohol grades from Kuraray, such as POVAL C506, POVAL C118 from Nippon Goshei.

The inkjet receiver coating on the surface of the base paper layer may, next to silica particles and possibly binder, further preferably comprise one or more of the following agents:
- Crosslinking agents: between 0.05 and 5 g/m², preferably between 0.2 and 2 g/m², e.g. chosen from the list consisting of aldehydes, polyaldehydes, dialdehydes, alcohols, boronic acid, borax, polyalcohols, carbamates, polycarbamates, carbonic acids, glyoxal based agent, zirconium based agents and polycarbonic acids.
- Particle surface modifying agents or coupling agents: between 0.05 and 5 g/m², preferably between 0.2 and 2 g/m², e.g. chosen from the non-limiting list consisting of amino silanes, ureido silanes, aldehyde silanes, tetraethylorthosilicate, siliazanes, organically modified silanes, organically modified siliazanes, chlorosilanes, organically modified chlorosilanes, bissilanes, organobissilanes, silsesquioxanes, polysilsesquioxnes, silane oligomers, organically modified silane oligomers, bissilane oligomers, organically modified bissilane oligomers, oligomeric silsesquioxanes, and oligomeric polysilsesquioxanes.
- Additives: wetting agent between 0.005 and 2 g/m², preferably between 0.05 and 1 g/m²; and/or defoaming agent between 0.005 and 2 g/m², preferably between 0.05 and 1 g/m²; and/or fungicide between 0.005 and 2 g/m², preferably between 0.05 and 1 g/m².

Preferably, the side of the base paper layer unto which the coating or inkjet receiver coating is applied has been smoothened (German: geglättet), preferably during its production. The smoothening diminishes the amount of binder penetrating the paper's core, such that the pigments contained therein can be better bound by the available binder substance and variations in absorption may be less. Preferably, the printable paper layer, i.e. the base paper layer including the inkjet receiver coating but without the pattern, has a Gurley value of between 20 and 120 seconds, and preferably between 20 and 80 seconds. Such paper layer results in an excellent printing quality, since the deposited inks tend to bleed less into the paper, and the position accordance, or so-called register, between printed patterns applied with different inkjet heads is more easily attained and maintained. Indeed, a relatively high Gurley value leads to more dimensionally stable paper, since it is less prone to water absorptance. When dealing with the impregnation with thermosetting resin of such a high Gurley value paper one could consider tuning down the speed of the impregnation channel, the use of pressurized impregnation techniques and the lowering of the viscosity of the impregnating resin.

The inkjet receiver coating available on the base paper surface may have been applied in a single step, alternatively, and according to the most preferred embodiment said coating has been applied in at least two partial steps, wherein respectively a first layer with a first composition and, subsequently, a second layer has been applied with a second composition, both compositions at least comprising said binder.

The inventor has witnessed that the application of a coating in two partial steps leads to a better incorporation or binding of the pigment. The risk of dust releasing from the paper is reduced as compared to a situation where the same amount of pigment is applied in only one coating step. The application of the coating in two steps may further lead to a more even application of the entirety of an inkjet receiver coating obtained in such manner. Where the first composition may be partly absorbed in the paper layer in a non-uniform manner, and therefor may lead to an uneven first layer having less effective portions, the second composition levels out the possible unevenness at least to some extent.

The application of the inkjet receiver coating in at least two steps allows for creating gradients of certain components of the coating through its thickness, since the first and second composition may have different components or may both have components that are present in a different concentration. The application of the inkjet receiver coating in at least two steps further allows to create coating layers of different thickness.

With the same aim as in the first aspect, the invention in accordance with its second independent aspect is a method for manufacturing a laminate comprising a decorative paper layer in accordance with the first aspect of the invention or the preferred embodiments thereof, wherein said method at least comprises the step of providing said decorative paper layer and a thermosetting resin and the step of hot pressing at least said decorative paper layer and said thermosetting resin, wherein said thermosetting resin is cured.

Preferably said step of providing said resin includes impregnating said decorative paper layer with resin and/or providing an additional resin layer adjacent to said decorative paper layer. Preferably, a decorative paper layer in accordance with the invention is provided with thermosetting resin, such as melamine resin, preferably after providing it with the printed pattern, e.g. by means of inkjet printing. For this reason, preferably the paper layer is only provided with an inkjet receiver coating at one side thereof, namely at the side provided to be printed upon. The other, opposite side, is preferably untreated, such that this opposite side shows the original porosity of the paper layer from which it is started. The resin may then be provided substantially from the bottom side into the papers core. To allow sufficient impregnation of the paper having the inkjet receiving coating, the speed of the impregnation channel may be tuned down, the resin may be made less viscous, the impregnation may be pressurized and/or the resin may be heated, e.g. to between 30 and 70°C, preferably between 30 and 50°C.

Preferably, said additional resin layer is a transparent or translucent paper layer impregnated with thermosetting resin and provided at the side of the decorative paper layer provided with the printed pattern. More particularly, the transparent or translucent paper layer may be a so-called overlay, namely an alpha-cellulose paper impregnated with thermosetting resin, such as melamine resin.

Preferably, said laminate is a laminate panel, wherein said panels at least comprise a substrate material and a provided thereon top layer comprising at least said decorative paper layer and said thermosetting resin. Preferably, said step of hot pressing results in said top layer being adhered to said substrate by means of said cured thermosetting resin.

Preferably, the base paper layer of the first and/or second aspect of the invention is opaque and/or contains titanium oxide as a whitening agent.

Preferably the printed pattern applied on the decorative paper layer of the invention, covers the majority, and preferably 80 percent or more of the surface of said paper layer

Preferably said base paper layer is, before or after printing, and before or after application of the inkjet receiver coating, provided with an amount of thermosetting resin equaling 40 to 250% dry weight of resin as compared to weight of the paper. Experiments have shown that this range of applied resin provides for a sufficient impregnation of the paper, that avoids splitting to a large extent, and that stabilizes the dimension of the paper to a high degree.

Preferably the base paper layer is, before or after printing, and before or after application of the inkjet receiver coating, provided with such an amount of thermosetting resin, that at least the paper core is satisfied with the resin. Such satisfaction can be reached when an amount of wet resin is provided that corresponds to at least 1.5 or at least 2 times the paper weight. For example, a paper having a surface weight of 70 grams per square meter, may be treated with 140 grams per square meter wet resin, i.e. 2 times the paper weight, to yield, when dried a treated paper of 140 grams per square meter having a satisfied core. It should be clear that the resin which is provided on the paper layer, is not necessarily only available in the core of the paper, but may form surface layers on both flat sides of the paper. The inkjet receiver coating may then be present on the surface of the paper with the intermediary of such a surface layer of thermosetting resin. According to a special embodiment, the paper layer is firstly impregnated through or satisfied, and, afterwards, at least at the side thereof to be printed, resin is partially removed and possibly said coating or inkjet receiver coating is provided.

Preferably, the obtained resin provided paper layer, i.e. after provision of the thermosetting resin, has a relative humidity lower than 15%, and still better of 10% by weight or lower.

In general, the paper and inkjet receiver coating, whether provided with resin or not, has a relative humidity lower than 15%, and still better of 10% by weight or lower while printing.

Preferably the step of providing said paper layer with thermosetting resin involves applying a mixture of water and the resin on said paper layer. The application of said mixture might involve immersion of the paper layer in a bath of said mixture and/or spraying, jetting or otherwise coating said mixture on said paper. Preferably the resin is provided in a dosed manner, for example by using one or more squeezing rollers and/or doctor blades to set the amount of resin added to the paper layer.

Preferably said thermosetting resin is a melamine based resin, more particularly a melamine formaldehyde resin with a formaldehyde to melamine ratio of 1.4 to 2. Such melamine based resin is a resin that polycondensates while exposed to heat in a pressing operation. The polycondensation reaction creates water as a by-product. It is particularly with these kinds of thermosetting resins, namely those creating water as a by-product, that the present invention is of interest. The created water, as well as any water residue in the thermosetting resin before the pressing, must leave the hardening resin layer to a large extent before being trapped and leading to a loss of transparency in the hardened layer. The available ink layer can hinder the diffusion of the vapor bubbles to the surface, however the present invention provides measures for limiting such hindrance. The inkjet receiver coating is beneficial in this regard as it may provide for an additional buffer for capturing such escaping vapor. When making use of an inkjet receiver coating which is porous and/or hydrophilic, which is the case when using e.g. silica and/or polyvinyl alcohol, some of the water vapor originating upon curing the thermosetting resin of the paper layer in the press may be taken up by this coating, such that the process is less prone to the origination of pressing defects, such as locked in water vapor bubbles. Other examples of such thermosetting resins leading to a similar polycondensation reaction include ureum-formaldehyde based resins and phenolformaldehyde based resins.

Preferably the paper layer is only impregnated with resin after application of the inkjet receiver coating and after printing. In this way the inkjet receiver coating is not at all effected by the water contained in the water-resin mixture applied for impregnation purposes.

As is clear from the above, the method of the second aspect of the invention comprises the step of hot pressing the printed and resin provided paper layer, at least to cure the resin of the obtained resin provided decor paper. Preferably the method of the invention forms part of a DPL process as above described, wherein the printed resin provided paper layer of the invention is taken up in the stack to be pressed as the decorative layer. It is of course not excluded that the method of the invention would form part of a CPL (Compact Laminate) or an HPL (High Pressure Laminate) process in which the decorative layer is hot pressed at least with a plurality of resin impregnated core paper layers, e.g. of so called Kraft paper, forming a substrate underneath the decorative layer, and wherein the obtained pressed and cured laminate layer, or laminate board is, in the case of an HPL, glued to a further substrate, such as to a particle board or an MDF or HDF board.

Clearly, in general, and/or in accordance with the second aspect of the invention any type of substrate material may be practiced, such as the aforementioned particle board, MDF, HDF board, or a board comprising thermoplastic material, or a mineral board. Said board comprising thermoplastic material may be a closed-cell foamed PVC board possibly comprising fillers or a solid, i.e. non-foamed, PVC board possibly comprising fillers, wherein the filler content may or may not be higher than 50 weight percent of the core material. Such filler may be a mineral filler, such as chalk or lime, or an organic filler such as wood, bamboo, grass and the like. Said mineral board may be a hydraulically setting board or a pressed board. Said mineral board may be a gypsum based board, a fiber cementboard or another cement based board such as a board based on magnesiumoxide, for example set by reaction with magnesiumchloride and/or magnesiumsulphate.

Preferably a further resin layer is applied above the printed pattern after printing, e.g. by way of an overlay, i.e. a resin provided carrier layer, or a liquid coating, preferably while the decor layer is laying on the substrate, either loosely or already connected or adhered thereto.

The base paper layer of the invention may be a colored, pigmented and/or dyed base paper. The use of a colored and/or dyed base layer enables further limiting the dry weight of deposited ink for attaining a particular pattern or color. In the case of paper, preferably the dye or pigment is added to the pulp before the paper sheet is formed. According to an alternative the ink receiving coating on said base paper layer to be printed is colored or pigmented with colored pigments. In accordance with the general disclosure, however, the pigments contained in the inkjet receiver coating are preferably colorless or white.

It is clear that, according to the most preferred embodiment of the present invention, the paper layer, while printing, is still flexible and that the paper layer is only attached or put on the plate shaped substrate after printing. According to a variant the paper layer is already attached or loosely laid on the plate shaped substrate while printing. The possible attachment with the substrate can be reached by means of urea based, phenol based, melamine based, polyurethane based glues and similar adhesives. Such attachment can be attained by means of a pressing treatment, whether or not a heated press treatment.

Preferably, the method of the second aspect of the invention further comprises the step of applying a counter layer or balancing layer at the surface of the possible substrate opposite the printed paper layer.

Preferably the mutual adherence of the plate-shaped substrate, the possible counter layer and the possible transparent or translucent layer is obtained in one and the same press treatment. According to the most preferred embodiment of the second aspect, these steps are taken up in a DPL process.

According to the most important example of the invention, a standard printing paper, like the one used for rotogravure, having a weight between 60 and 90 grams per square meter is provided with an inkjet receiver coating in accordance with the first aspect, and is printed with a wood pattern using a digital inkjet printer with aqueous pigmented inks, also in accordance with the first aspect. Subsequently the printed paper layer is provided with melamine resin by means of a standard impregnation channel; namely by means of roller, immersion, jetting and/or spraying equipment. The resin provided paper layer is then dried until a residual humidity of less than 10%, preferably about 7%, is reached. A stack is formed of a resin provided counter layer, a plate shaped substrate, the printed resin provided paper layer and a resin provided paper layer forming a so-called overlay. The stack is then pressed during less than 30 seconds at a temperature of about 180-210°C and a pressure of more than 20 bar, for example 38 bar. While pressing the surface of the stack contacts a structured press element, such as a structured press plate, and a relief is formed in the top layer of the obtained laminate panel. Possibly the obtained relief can be formed in register with the printed pattern of the resin provided paper layer.

It is further clear that the decorative paper layer of the first aspect is suitable for use as a decor paper in a method for manufacturing floor panels, furniture panels, ceiling panels and/or wall panels, more particularly in accordance with the DPL method therefor.

It is clear that decorative paper layers mentioned above may have to be divided for obtaining their respective final dimensions. The panels obtained by means of a DPL press treatment or similar are preferably sawn or otherwise divided. Other treatments of the obtained panels are of course not excluded.

It is further clear that the further application of the decorative paper layers is preferably through a DPL press treatment. However, several alternative applications may be practiced as well. For example, such paper layer, preferably after having been printed, may be glued to a substrate, and finished by means of an acidly curing, a UV curing or an electron beam curing transparent lacquer.

Here below the invention is further elucidated by means of an example, without limiting character.

### EXAMPLE:

A base paper layer having a weight of 70 grams per square meter is provided with an inkjet receiver coating at a dry rate of 2,52 grams per square meter, wherein the inkjet receiver coating essentially comprises crosslinked polyvinyl alcohol at a rate of 0,42 grams per square meter, particles of precipitated silica at a rate of 1 gram per square meter, calciumchloride at a rate of 1 gram per square meter and other additives at a rate of 0,1 gram per square meter. The particles of precipitated silica had a d50 value of 5.3 micrometer, a d10 of 3 micrometer and a d90 of 10 micrometer, as measured according to EN 13320, namely by a dynamic light scattering technique using a laser having an emission wavelength of 632.8 nm and measured under a scattering angle of 90 degrees. This coated paper is labelled as Paper A.

A premetered application method was used to apply ink on the thus treated paper, as well as on a commercially available inkjet quality paper (Paper B) that comprises fumed silica particles with a particle size d90 smaller than 500 nanometers. The applied ink coatings where then analysed by a Byk Spectro guide to measure the L, a and b value.

Then the OD (optical density) value was measured with a spectrophotometer. The obtained coated papers were then impregnated with melamine resin and hot pressed together with a melamine impregnated alphacellulose paper (overlay) to an MDF board material. The adhesion or lamination strength is evaluated by a cross-cut test according to ISO2409:1992(E). Paints. International standard. 1992-08-15. The cuts and cross-cuts are made in the surface of the obtained laminate in a lattice with a spacing of 1 mm between cuts and using a weight of 600 g, in combination with a Tesa tape TM 4104 PVC tape. The evaluation of the adhesion was performed in accordance with the below table.

| Evaluation value | Observation |
|---|---|
| 0 | The edges of the cuts are completely smooth: none of the squares of the lattice is detached (=perfect adhesion). |
| 1 | Detachment of small flakes of the coating at the intersections of the cuts. A cross-cut area not greater than 5% is affected. |
| 2 | The coating has flaked along the edges and/or at the intersections of the cuts. A cross-cut area greater than 5%, but not significantly greater than 15%, is affected. |
| 3 | The coating has flaked along the edges of the cuts partly or wholly in large ribbons, and/or it has flaked partly or wholly on different parts of the squares. A cross-cut area significantly greater than 15%, but not significantly greater than 35%, is affected. |
| 4 | The coating has flaked along the edges of the cuts in large ribbons, and/or some of the squares has detached partly or wholly. A cross-cut area significantly greater than 35%, but not significantly greater than 65%, is affected. |
| 5 | Any degree of flaking that cannot even be classified by classification 4. |

Herein, an evaluation value below 2 is desired. The obtained results are listed in the below table, where it can be seen that the combination of a relatively large ink pigment with a still larger silica particle in the inkjet receiver coating gives the best results, ie a combination of acceptable adhesion and a high color density.

| | Color Density / Adhesion | |
|---|---|---|
| Aqueous Red Ink | Paper A | Paper B |
| C.I. Red pigment 254, Average particle size 121 nm | 1,20 / 3 | 1,18 / 5 |
| C.I. Red pigment 254, Average particle size 200 nm | 1,16 / 1 (Invention) | 1,12 / 4 |

The above results were further validated on a single-pass digital inkjet printer of the roll-to-roll type (KBA - Rotajet), and having a printing width of 1600 mm. Also for other ink colors and even mixed colors an enhancement in adhesion with good color density was obtained.

## Claims

1. A decorative paper layer comprising a base paper layer, an inkjet receiver coating and a pattern formed thereon by digitally applying inks from a set of a plurality of differently colored inks including a red ink, **characterized in that** at least one of said inks comprises color pigments having an average particle diameter larger than 150 nm, and **in that** said inkjet receiver coating comprises silica pigments, wherein said silica particles are particles of silica gel and have an average particle size which is at least 5 times larger than said average particle diameter of said color pigments and/or have an average particle size of 1 to 40 micrometer, preferably 1 to 15 micrometer, or 2 to 12 micrometer, with said average particle sizes and said average particle diameters being determined by laser light scattering granulometry technique in accordance with ISO 13320, and **in that** said color pigments comprise red pigments selected from the group consisting of C.I. Pigment Red 122, C.I. Pigment Red 144, C.I. Pigment Red 176, C.I. Pigment Red 188, C.I. Pigment Red 207, C.I. Pigment Red 242, C.I. Pigment Red 254, C.I. Pigment Red 272, mixed crystals of any of the aforementioned red pigments, quinacridone, mixtures of quinacridones, and quinacridone derivatives and **in that** said core of said base paper layer is free from silica particles.

2. The decorative paper layer of claim 1, **characterized in that** the thickness of said base paper layer is between 50 and 200 µm, preferably between 60 and 130 µm.

3. The decorative paper layer of any of the preceding claims, **characterized in that** silica particles are available on said surface of said base paper layer.

4. The decorative paper layer of claim 3, **characterized in that** said silica particles are particles of precipitated silica, or silica gel, having an average particle size of 1 to 40 micrometer, preferably 1 to 15 micrometer, or 2 to 12 micrometer.

5. Method for manufacturing a laminate comprising a decorative paper layer in accordance with any of the preceding claims, wherein said method at least comprises the step of providing said decorative paper layer and a thermosetting resin and the step of hot pressing at least said decorative paper layer and said thermosetting resin, wherein said thermosetting resin is cured.

6. Method according to claim 5, **characterized in that** said step of providing said resin includes impregnating said decorative paper layer with resin and/or providing an additional resin layer adjacent to said decorative paper layer.

7. Method according to claim 6, **characterized in that** said additional resin layer is a transparent or translucent paper layer impregnated with thermosetting resin and provided at the side of the decorative paper layer provided with the printed pattern.

8. Method according to any of claims 5 to 7, **characterized in that** said laminate is a laminate panel, wherein said panels at least comprise a substrate material and a provided thereon top layer comprising at least said decorative paper layer and said thermosetting resin.

9. Method according to claim 8, **characterized in that** said step of hot pressing results in said top layer being adhered to said substrate by means of said cured thermosetting resin.

## Patentansprüche

1. Dekorative Papierschicht, die eine Basispapierschicht, eine Tintenstrahlempfängerbeschichtung und eine Musterung umfasst, die darauf durch digitales Auftragen von Tinten aus einem Satz von mehreren unterschiedlich gefärbten Tinten, einschließlich einer roten Tinte, gebildet wird, **dadurch gekennzeichnet, dass** mindestens eine der oben genannten Tinten Farbpigmente, die einen durchschnittlichen Teilchendurchmesser von mehr als 150 nm aufweist, umfasst, und dass die oben genannte Tintenstrahlempfängerbeschichtung Kieselsäurepigmente umfasst, wobei die oben genannten Kieselsäureteilchen Teilchen aus Silicagel sind und eine durchschnittliche Teilchengröße haben, die mindestens fünfmal größer ist als der durchschnittliche Teilchendurchmesser der oben genannten Farbpigmente haben und/oder eine durchschnittliche Teilchengröße von 1 bis 40 Mikrometer, vorzugsweise von 1 bis 15 Mikrometer oder von 2 bis 12 Mikrometer haben, wobei die oben genannten durchschnittlichen Teilchengrößen und die oben genannten durchschnittlichen Teilchendurchmesser durch Laserlichtstreuungs-Granulometrietechnik gemäß ISO 13320 bestimmt werden, und dass die oben genannten Farbpigmente rote Pigmente umfassen, die aus der Gruppe ausgewählt sind, die aus C.I. Pigment Red 122, C.I. Pigment Red 144, C.I. Pigment Red 176, C.I. Pigment Red 188, C.I. Pigment Red 207, C.I. Pigment Red 242, C.I. Pigment Red 254, C.I. Pigment Red 272, Mischkristalle eines der oben genannten roten Pigmente, Quinacridon, Mischungen von Quinacridonen und Quinacridonderivate besteht, und dass der oben genannte Kern der oben genannten Basispapierschicht frei von Kieselsäureteilchen ist.

2. Dekorative Papierschicht nach Anspruch 1, **dadurch gekennzeichnet, dass** die Dicke der oben genannten Basispapierschicht zwischen 50 und 200 µm, vorzugsweise zwischen 60 und 130 µm beträgt.

3. Dekorative Papierschicht nach einem der vorhergehenden Ansprüche, **dadurch gekennzeichnet, dass** Kieselsäureteilchen auf der oben genannten Oberfläche der oben genannten Basispapierschicht vorliegen.

4. Dekorative Papierschicht nach Anspruch 3, **dadurch gekennzeichnet, dass** die oben genannten Kieselsäureteilchen Teilchen aus gefällter Kieselsäure oder Silicagel sind, die eine durchschnittliche Teilchengröße von 1 bis 40 Mikrometer, vorzugsweise von 1 bis 15 Mikrometer oder von 2 bis 12 Mikrometer haben.

5. Verfahren zur Herstellung eines Laminats, das eine dekorative Papierschicht nach einem der vorhergehenden Ansprüche umfasst, wobei das oben genannte Verfahren mindestens den Schritt des Bereitstellens der oben genannten dekorativen Papierschicht und eines wärmehärtbaren Harzes und den Schritt des Heißpressens mindestens der oben genannten dekorativen Papierschicht und des oben genannten wärmehärtbaren Harzes umfasst, wobei das oben genannte wärmehärtbare Harz ausgehärtet wird.

6. Verfahren nach Anspruch 5, **dadurch gekennzeichnet, dass** der oben genannte Schritt des Bereitstellens des oben genannten Harzes das Imprägnieren der oben genannten dekorativen Papierschicht mit Harz und/oder das Bereitstellen einer zusätzlichen Harzschicht angrenzend an die oben genannte dekorative Papierschicht umfasst.

7. Verfahren nach Anspruch 6, **dadurch gekennzeichnet, dass** die oben genannte zusätzliche Harzschicht eine transparente oder durchscheinende Papierschicht ist, die mit wärmehärtbarem Harz imprägniert ist und die auf der Seite der mit der gedruckten Musterung versehenen dekorativen Papierschicht vorgesehen ist.

8. Verfahren nach einem der Ansprüche 5 bis 7, **dadurch gekennzeichnet, dass** das oben genannte Laminat ein Laminatpaneel ist, wobei die oben genannten Paneele mindestens ein Substratmaterial und eine darauf befindliche Deckschicht umfassen, die mindestens die oben genannte dekorative Papierschicht und das oben genannte wärmehärtbare Harz umfasst.

9. Verfahren nach Anspruch 8, **dadurch gekennzeichnet, dass** der oben genannte Schritt des Heißpressens dazu führt, dass die oben genannte Deckschicht mittels des oben genannten ausgehärteten wärmehärtbaren Harzes an dem oben genannten Substrat haftet.

## Revendications

1. Couche de papier décorative qui comprend une couche de papier de base, un revêtement de réception de jet d'encre et un agencement formé par-dessus par l'intermédiaire d'une application par voie numérique d'encres choisies parmi un jeu de plusieurs encres différemment colorées englobant une encre rouge, **caractérisée en ce qu'**au moins une desdites encres comprend des pigments de couleurs qui possèdent un diamètre moyen de particule qui est supérieur à 150 nm, et **en ce que** ledit revêtement de réception de jet d'encre comprend des pigments à base de silice, dans laquelle lesdites particules à base de silice sont des particules de gel de silice et possèdent une granulométrie moyenne qui est au moins cinq fois supérieure audit diamètre moyen de particule desdits pigments de couleurs et/ou possèdent une granulométrie moyenne qui s'élève de 1 à 40 µm, de préférence 1 à 15 µm, ou de 2 à 12 µm, lesdites granulométries moyennes et lesdits diamètres moyens de particules étant déterminés par une technique de granulométrie par diffusion de lumière laser en conformité avec la norme ISO 13320, et **en ce que** lesdits pigments de couleurs comprennent des pigments rouges qui sont choisis parmi le groupe constitué par C.I. Pigment Red 122, C.I. Pigment Red 144, C.I. Pigment Red 176, C.I. Pigment Red 188, C.I. Pigment Red 207, C.I. Pigment Red 242, C.I. Pigment Red 254, C.I. Pigment Red 272, des cristaux mixtes de l'un quelconque des pigments rouges mentionnés ci-dessus, la quinacridone, des mélanges de quinacridones et des dérivés de quinacridone, et **en ce que** ledit noyau de ladite couche de papier de base est exempt de particules à base de silice.

2. Couche de papier décorative selon la revendication 1, **caractérisée en ce que** l'épaisseur de ladite couche de papier à base se situe entre 50 et 200 µm, de préférence entre 60 et 130 µm.

3. Couche de papier décorative selon l'une quelconque des revendications précédentes, **caractérisée en ce que** des particules à base de silice sont disponibles sur ladite surface de ladite couche de papier de base.

4. Couche de papier décorative selon la revendication 3, **caractérisée en ce que** lesdites particules à base de silice sont des particules à base de silice précipitée ou de gel de silice, qui possèdent une granulométrie moyenne qui s'élève de 1 à 40 µm, de préférence de 1 à 15 µm ou de 2 à 12 µm.

5. Procédé pour la fabrication d'un stratifié qui comprend une couche de papier décorative en conformité avec l'une quelconque des revendications précédentes, dans lequel ledit procédé comprend au moins l'étape au cours de laquelle on procure ladite couche de papier décorative et une résine thermodurcissable et l'étape au cours de laquelle on comprime à chaud au moins ladite couche de papier décorative et ladite résine thermodurcissable, dans lequel ladite résine thermodurcissable est durcie.

6. Procédé selon la revendication 5, **caractérisé en ce que** ladite étape au cours de laquelle on procure ladite résine englobe le fait d'imprégner ladite couche de papier décorative avec de la résine et/ou le fait de prévoir une couche de résine supplémentaire en position adjacente à ladite couche de papier décorative.

7. Procédé selon la revendication 6, **caractérisé en ce que** ladite couche de résine supplémentaire est une couche de papier transparente ou translucide imprégnée avec une résine thermodurcissable et prévue sur le côté de la couche de papier décorative sur lequel on prévoit l'agencement imprimé.

8. Procédé selon l'une quelconque des revendications 5 à 7, **caractérisé en ce que** ledit stratifié est un panneau stratifié, dans lequel lesdits panneaux comprennent au moins une matière faisant office de substrat et une couche supérieure prévue par-dessus qui comprend au moins ladite couche de papier décorative et ladite résine thermodurcissable.

9. Procédé selon la revendication 8, **caractérisé en ce que** ladite étape de compression à chaud permet à ladite couche supérieure d'adhérer audit substrat au moyen de ladite résine thermodurcissable qui a été durcie.
